# EUROPEAN PATENT SPECIFICATION

(11) **EP 3 000 293 B1**
(45) Date of publication and mention of the grant of the patent: **07.11.2018**
(21) Application number: 15186195.2
(22) Date of filing: 22.09.2015
(51) Int. Cl.: A01B 33/06

(54) **A ROTARY HARROW WITH IMPROVED STRENGTH**
KREISELEGGE MIT VERBESSERTER FESTIGKEIT
HERSE ROTATIVE À RÉSISTANCE AMÉLIORÉE

(30) Priority: 29.09.2014 IT TO20140771
(43) Date of publication of application: 30.03.2016
(73) Proprietor: Frandent Group S.r.l., 10060 Osasco (TO) (IT)
(72) Inventor: BRUNO, Ezio, 10060 Osasco (Torino) (IT)
(74) Representative: Marchitelli, Mauro

(56) References cited:
- EP-A1- 2 111 733
- FR-A1- 2 559 013
- GB-A- 2 035 026

## Description

### Field of the invention

The present invention relates to a rotary harrow for working the soil, intended to be used by an agricultural tractor.

### Description of the prior art

A rotary harrow usually comprises an elongated channel-shaped profile closed by an elongated plate so as to form an elongated box-shaped frame. The elongated frame carries a plurality of soil working assemblies spaced apart from each other in a longitudinal direction. Each soil working assembly comprises a support fixed to the frame and a rotary shaft rotatably mounted within a cavity of the respective support. The rotary shaft has a first end that extends within the box-shaped frame and to which a toothed wheel is fixed, and a second end that extends outside of the frame and to which the teeth for working the soil are fixed. The toothed wheels of the various soil working assemblies mesh with each other to transmit the rotation to the various rotary shafts from a transmission box intended to be connected to the power take off (PTO) of the tractor.

Usually, the support of each soil working assembly is fixed by means of screws to a bottom wall of the elongated channel-shaped profile.

The elongated channel-shaped profile which carries the various soil working assemblies is subject to intense fatigue stresses, during operation, which tend to cause the deformation of the elongated profile as a result of prolonged use in difficult soils. To confer the necessary strength to the frame, the elongated channel-shaped profile is usually composed of a robust steel sheet, for example with a thickness of 8 mm. Furthermore, it is usually provided with a reinforcing plate welded on the inner face of the bottom wall of the elongated channel-shaped profile.

Even using steel sheets with a high thickness and reinforcing plates, the fatigue stresses due to prolonged use on hard soils and in the presence of stones can lead to a deformation of the frame.

EP-A-2 111 733 discloses a rotary harrow having the features of the pre-characterizing portion of claim 1. The rotary harrow of EP-A-2 111 733 has transverse box bars. Bearing sleeves are arranged in the bottom of the box bars. A cross-sectional v-shaped profile carrier is provided, where recesses are attached for the bearing sleeves in a wedge-shaped area of the profile carrier.

### Object and summary of the invention

The object of the present invention is to provide a rotary harrow with a greater strength compared to the known solutions, in particular with a higher torsional strength of the frame.

According to the present invention, this object is achieved by a rotary harrow having the characteristics forming the subject of claim 1.

The claims form an integral part of the disclosure provided in relation to the invention.

### Brief description of the drawings

The present invention will now be described in detail with reference to the attached drawings, given purely by way of non-limiting example, in which:
- Figure 1 is a perspective view of a part of a rotary harrow according to the present invention,
- Figure 2 is a partially exploded perspective view of Figure 1,
- Figure 3 is a cross-section according to the line III-III of Figure 1, and
- Figure 4 is a perspective view analogous to Figure 1 illustrating a second embodiment of the invention.

### Detailed description

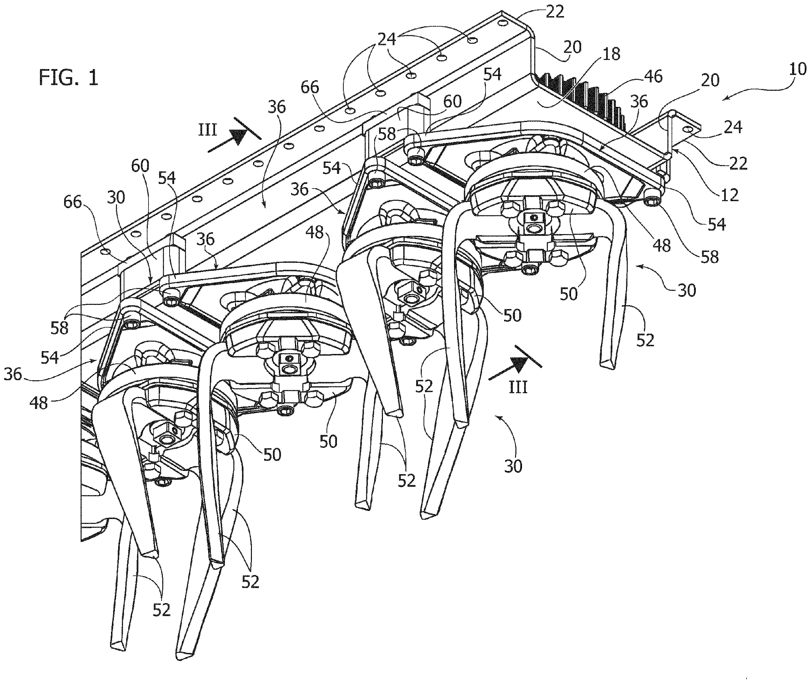

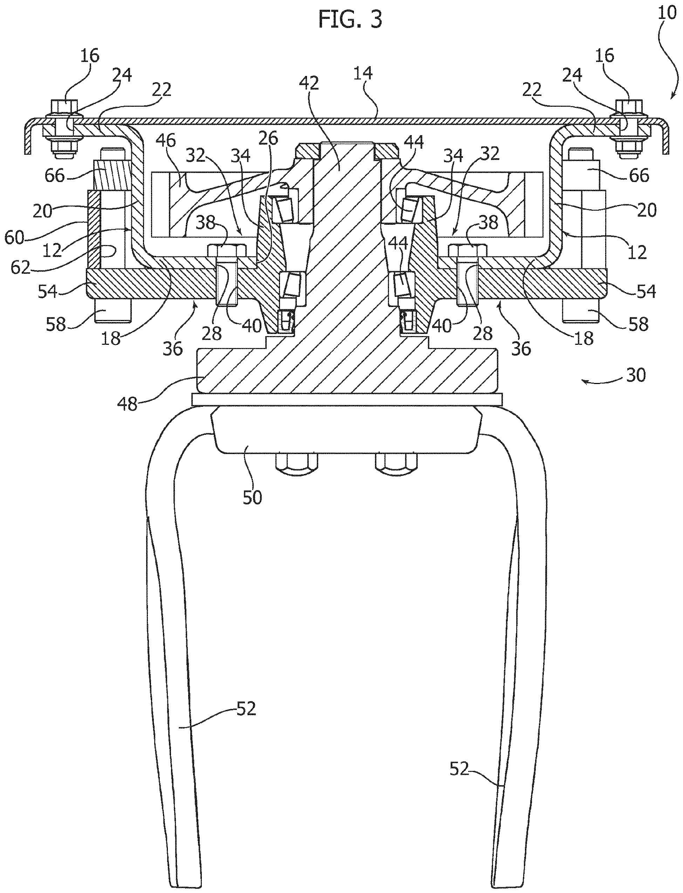

Figure 1 illustrates a section of a rotary harrow according to the present invention. With reference to Figure 3, the rotary harrow comprises an elongated box-shaped frame 10 including an elongated channel-shaped profile 12 and an elongated closing plate 14 (Figure 3) fixed to the elongated profile 12 by means of screws 16. The elongated channel-shaped profile 12 is formed of a bent steel sheet and comprises a bottom wall 18, two lateral sides 20, and two edges 22. The lateral sides 20 are orthogonal to the bottom wall 18 and parallel to each other. The edges 22 are formed by ends bent outwardly by 90° from the lateral sides 20. The edges 22 are provided with holes 24 in which the screws 16 are engaged for fixing the closing plate 14 to the elongated profile 12

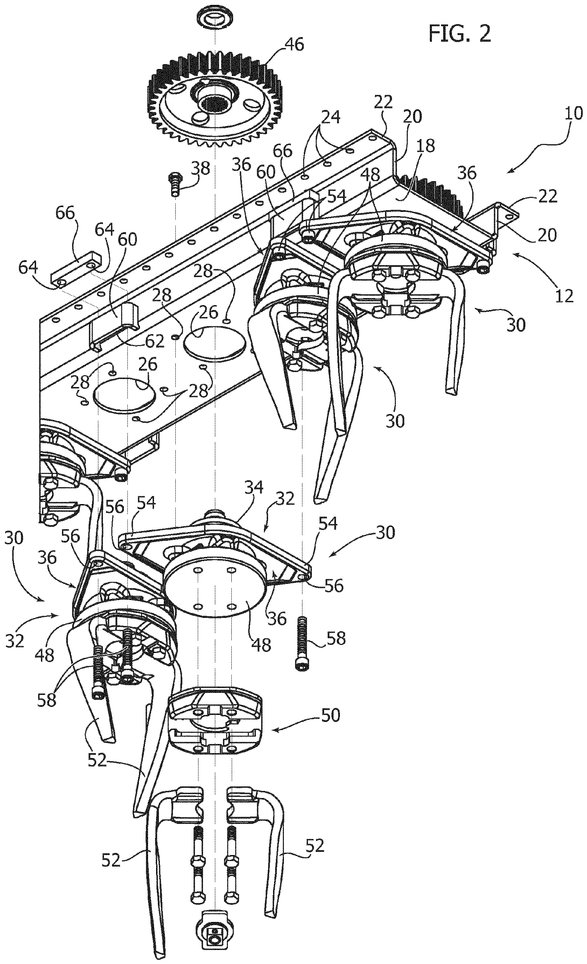

With reference to Figures 2 and 3, the bottom wall 18 of the elongated channel-shaped profile 12 is provided with an array of circular openings 26. Fixing holes 28 are arranged around each circular opening 26. For example, four fixing holes 28 may be provided around each circular opening 26.

With reference to Figures 1 to 3, the rotary harrow comprises a plurality of soil working assemblies 30 carried by the elongated channel-shaped profile 12. Each soil working assembly 30 is comprised of a support 32 formed by a robust body made of a high resistance metal such as steel or cast iron. Each support 32 comprises a hollow portion 34 and a radial flange 36. The hollow portion 34 of each support 32 extends partly inside the elongated frame 10 through a respective circular opening 26 of the bottom wall 18. The radial flange 36 is located outside the elongated frame 10 and rests on the outer face of the bottom wall 18. Each support 32 is fixed to the elongated channel-shaped profile 12 by means of screws 38 which extend through respective fixing holes 28 of the bottom wall 18 and engage respective threaded holes 40 formed in the radial flange 36.

Each soil working assembly 30 comprises a rotary shaft 42 (Figure 3) which extends through the hollow portion 34 of the respective support 32. Each rotary shaft 42 is rotatably supported by two bearings 44 carried by the hollow portion 34 of the support 32. Each rotary shaft 42 has one end located inside the elongated frame 10 to which a toothed wheel 46 is fixed, and a head 48 located outside of the elongated frame 10 to which an attachment device 50 is fixed for attaching the teeth 52. The attachment device 50 can be, for example, of the type described in the document EP-A-1419682 by the same applicant. The toothed wheels 46 of the various soil working assemblies 30 mesh with each other to transmit the rotating movement to the rotary shafts 42 starting from a single transmission box (not illustrated) intended to be connected to the PTO of an agricultural tractor

With reference to Figures 1 to 3, the radial flange 36 of each support 32 has at least two extensions 54 which extend in the transverse direction outside of the lateral sides 20 of the elongated profile 12. The extensions 54 of each radial flange 36 are fixed to lateral sides 20 opposite to the elongated profile 12.

In the embodiment illustrated in Figures 1 to 3, each radial flange 36 is essentially rhombus-shaped, with two vertices with an acute angle forming the extensions 54. Each extension 54 has a through-hole 56 engaged by a respective fixing screw 58. The extensions 54 of the radial flanges 36 are fixed at C-shaped brackets 60 welded on the outer faces of the lateral sides 20 of the elongated profile 12. The end of the C-shaped brackets 60 are welded to the sides 20, so that each bracket 60 forms a slot 62 parallel to the respective lateral side 20. Each fixing screw 58 engages a respective threaded hole 64 formed in a prismatic block 66 located on the opposite side of the flange 60 relative to the respective extension 54. Each prismatic block 66 has two threaded holes 64 which are engaged by the fixing screws 58 of two extensions 54 belonging to two soil working assemblies 30 adjacent to each other. The soil working assemblies 30 located at opposite ends of the elongated frame 10 have an extension 54 which is not fixed to a corresponding extension of a working assembly.

As is seen in Figures 1 and 2, the radial flanges 36 are orientated so that in each adjacent pair of soil working assemblies 30, two extensions 54 belonging to two different soil working assemblies 30 are fixed to the same bracket 60 and to the same prismatic block 66.

The fact that the supports 32 of the soil working assemblies 30 are fixed to the sides 20 of the elongated profile 12 increases the torsional strength of the profile 12, given that the sides 20 contribute to supporting the torsional stresses between the adjacent working assemblies 30. A very important additional increase of the strength of the profile 12 is obtained thanks to the fact that the supports 32 of each pair of adjacent working assemblies 30 are fixed to each other. In fact, the supports 32 interconnected to each other as well as to the frame 10 render the frame 10 more rigid compared to the solutions according to the prior art in which each support transfers the stresses coming from the soil solely to the frame.

The solution according to the present invention allows avoiding the use of a reinforcing plate that, in the solutions according to the prior art, is welded onto the inner face of the bottom wall of the elongated channel-shaped profile. The solution according to the invention also allows reduction of the thickness of the elongated channel-shaped profile from a thickness of 8 mm (used in the solutions according to the prior art) to a thickness of 5-6 mm. Despite reducing the thickness of the elongated channel-shaped profile and eliminating the reinforcing plate on the bottom wall, the solution according to the present invention allows a higher torsional strength to be obtained.

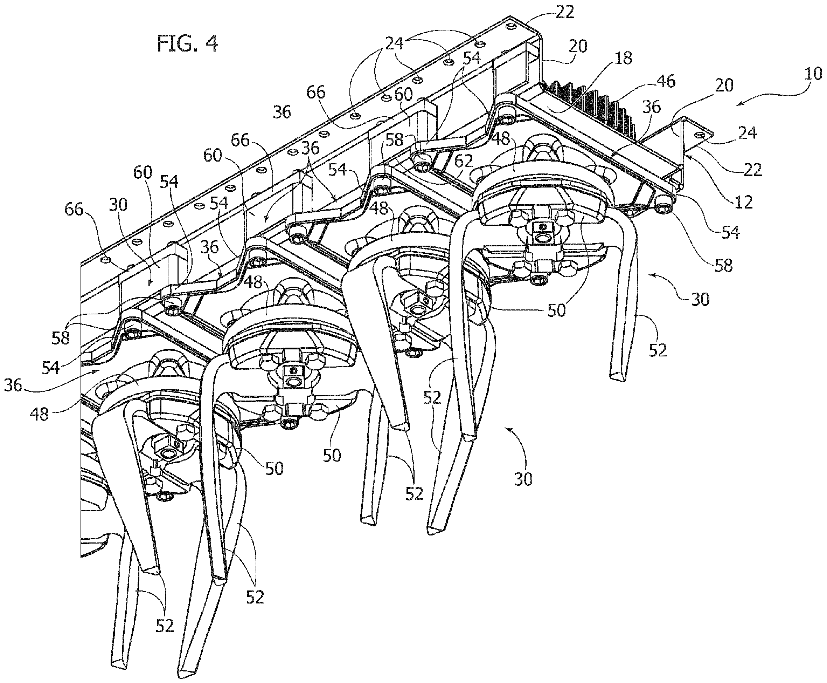

Figure 4 illustrates a second embodiment of the present invention. The elements corresponding to those previously described are indicated with the same reference numerals.

In the variant of Figure 4, each radial flange 36 has four extensions 54 fixed pairwise to opposite lateral sides 20 of the elongated profile 12. The two extensions 54 of each radial flange 36 located on the same side 20 are fixed to two adjacent brackets 60. In this case, each radial flange 36 is fixed to a radial flange 36 of an adjacent soil working assembly 30 by means of two extensions 54 located on opposite sides of the frame 18. This solution allows an even greater increase of the torsional strength to be obtained and can be used in the case of larger harrows.

Of course, without prejudice to the principle of the invention, the construction details and the embodiments may widely vary with respect to what is described and illustrated, without departing from the scope of the invention as defined by the following claims that follow.

## Claims

1. A rotary harrow comprising:
- an elongated box-shaped frame (10) including an elongated channel-shaped profile (12) having a bottom wall (18) and two lateral sides (20),
- a plurality of soil working assemblies (30) carried by said elongated profile (12), wherein each of said soil working assemblies (30) comprises a support (32) having a hollow portion (34), a rotary shaft (42) rotatably carried by the support (32), a toothed wheel (46) fixed to one end of the rotary shaft (42) located within said elongated frame (10) and a tooth attachment device (50) fixed to a head (48) of said rotary shaft (42) located outside of said frame (10),
**characterized in that** the hollow portion (34) of each of said supports (32) extends partially inside said frame (10) and **in that** each of said supports (32) is provided with a radial flange (36) located outside the elongated frame (10) and fixed by means of screws (38) to the bottom wall (18) of the elongated profile (12), the radial flange (36) of each support (32) having at least two extensions (54) that protrude in a transverse direction outwardly from the respective lateral sides (20), said extensions (54) being fixed to opposite lateral sides (20) of said elongated profile (12) .

2. A rotary harrow according to claim 1, wherein at least two extensions (54) belonging to two radial flanges (36) of each pair of adjacent soil working assemblies (30) are fixed to each other.

3. A rotary harrow according to claim 1 or claim 2, wherein said extensions (54) are fixed to C-shaped brackets (60) welded to the lateral sides (20) of said elongated profile (12).

4. A rotary harrow according to claim 3, wherein said extensions (54) are fixed to respective sides (20) by screws (58) which extend through respective slots (62) formed by said C-shaped brackets (60).

5. A rotary harrow according to claim 4, wherein each of said screws (58) engages a threaded hole (64) of a respective prismatic block (66).

6. A rotary harrow according to claim 5, wherein at least two extensions (54) belonging to two radial flanges (36) of each pair of adjacent soil working assemblies (30) are fixed to each other by means of respective screws (58) which extend through the same slot (62) and engage the same prismatic block (66).

7. A rotary harrow according to any one of the preceding claims, wherein each of said radial flanges (36) is essentially rhombus-shaped with two vertices with an acute angle forming said extensions (54).

8. A rotary harrow according to any of claims 1 to 6, wherein each of said radial flanges (36) has four extensions (54) fixed pairwise to respective opposite lateral sides (20) of said elongated profile (12).

## Patentansprüche

1. Kreiselegge, umfassend:
- einen länglichen kastenförmigen Rahmen (10), der ein längliches kanalförmiges Profil (12) mit einer Bodenwand (18) und zwei Randseiten (20) beinhaltet,
- eine Vielzahl durch das längliche Profil (12) getragener Bodenbearbeitungsanordnungen (30), wobei jede der Bodenbearbeitungsanordnungen (30) eine Lagerung (32) mit einem Hohlabschnitt (34), eine von der Lagerung (32) drehbar getragene drehende Welle (42), ein an einem innerhalb des länglichen Rahmens (10) befindlichen Ende der drehenden Welle (42) fixiertes Zahnrad (46) und eine Zinkenbefestigungseinrichtung (50) umfasst, die an einem außerhalb des Rahmens (10) befindlichen Kopf (48) der drehenden Welle (42) fixiert ist,
**dadurch gekennzeichnet, dass** sich der Hohlabschnitt (34) jeder der Lagerungen (32) teilweise innerhalb des Rahmens (10) erstreckt und dass jede der Lagerungen (32) mit einem außerhalb des länglichen Rahmens (10) befindlichen und mittels Schrauben (38) an der Bodenwand (18) des länglichen Profils (12) fixierten Radialflansch (36) versehen ist, wobei der Radialflansch (36) jeder Lagerung (32) mindestens zwei Erweiterungen (54) aufweist, die in einer Querrichtung von den jeweiligen Randseiten (20) nach außen vorstehen, wobei die Erweiterungen (54) an entgegengesetzten Randseiten (20) des länglichen Profils (12) fixiert sind.

2. Kreiselegge nach Anspruch 1, wobei mindestens zwei Erweiterungen (54), die zu zwei Radialflanschen (36) jedes Paares angrenzender Bodenbearbeitungsanordnungen (30) gehören, aneinander fixiert sind.

3. Kreiselegge nach Anspruch 1 oder Anspruch 2, wobei die Erweiterungen (54) an C-förmigen Halterungen (60) fixiert sind, die an die Randseiten (20) des länglichen Profils (12) geschweißt sind.

4. Kreiselegge nach Anspruch 3, wobei die Erweiterungen (54) durch Schrauben (58), die sich durch von den C-förmigen Halterungen (60) gebildete jeweilige Schächte (62) erstrecken, an jeweiligen Seiten (20) fixiert sind.

5. Kreiselegge nach Anspruch 4, wobei jede der Schrauben (58) in eine Gewindeöffnung (64) eines jeweiligen prismenförmigen Blocks (66) eingreift.

6. Kreiselegge nach Anspruch 5, wobei mindestens zwei Erweiterungen (54), die zu zwei Radialflanschen (36) jedes Paares angrenzender Bodenbearbeitungsanordnungen (30) gehören, mittels jeweiliger Schrauben (58), die sich durch den gleichen Schacht (62) erstrecken und in den gleichen prismenförmigen Block (66) eingreifen, aneinander fixiert sind.

7. Kreiselegge nach einem der vorhergehenden Ansprüche, wobei jeder der Radialflansche (36) im Wesentlichen rautenförmig ist, wobei zwei Ecken mit spitzem Winkel die Erweiterungen (54) bilden.

8. Kreiselegge nach einem der Ansprüche 1 bis 6, wobei jeder der Radialflansche (36) vier Erweiterungen (54) aufweist, die paarweise an jeweiligen entgegengesetzten Randseiten (20) des länglichen Profils (12) fixiert sind.

## Revendications

1. Herse rotative comprenant :
- un cadre en forme de boîte allongé (10) comportant un profil en forme de canal allongé (12) ayant une paroi inférieure (18) et deux côtés latéraux (20),
- une pluralité d'ensembles de travail du sol (30) portés par ledit profil allongé (12), où chacun desdits ensembles de travail du sol (30) comprend un support (32) ayant une partie creuse (34), un arbre rotatif (42) porté en rotation par le support (32), une roue dentée (46) fixée à une extrémité de l'arbre rotatif (42) située dans ledit cadre allongé (10) et un dispositif de fixation de dents (50) fixé à une tête (48) dudit arbre rotatif (42) située à l'extérieur dudit cadre (10).
**caractérisée en ce que** la partie creuse (34) de chacun desdits supports (32) s'étend partiellement à l'intérieur dudit cadre (10) et **en ce que** chacun desdits supports (32) est doté d'une bride radiale (36) située à l'extérieur du cadre allongé (10) et fixé au moyen de vis (38) à la paroi inférieure (18) du profil allongé (12), la bride radiale (36) de chaque support (32) ayant au moins deux prolongements (54) qui font saillie dans une direction transversale vers l'extérieur à partir des côtés latéraux respectifs (20), lesdits prolongements (54) étant fixés à des côtés latéraux opposés (20) dudit profil allongé (12).

2. Herse rotative selon la revendication 1, dans laquelle au moins deux prolongements (54) appartenant à deux brides radiales (36) de chaque paire des ensembles de travail du sol adjacents (30) sont fixés l'un à l'autre.

3. Herse rotative selon la revendication 1 ou 2, dans laquelle lesdits prolongements (54) sont fixés à des pattes de fixation en forme de C (60) soudées aux côtés latéraux (20) dudit profil allongé (12).

4. Herse rotative selon la revendication 3, dans laquelle lesdits prolongements (54) sont fixés à des côtés respectifs (20) par des vis (58) qui s'étendent à travers des fentes respectives (62) formées par lesdites pattes de fixation en forme de C (60).

5. Herse rotative selon la revendication 4, dans laquelle chacune desdites vis (58) s'engage dans un trou fileté (64) d'un bloc prismatique respectif (66).

6. Herse rotative selon la revendication 5, dans laquelle au moins deux prolongements (54) appartenant à deux brides radiales (36) de chaque paire d'ensembles de travail du sol adjacents (30) sont fixés l'un à l'autre au moyen de vis respectives (58) qui s'étendent à travers la même fente (62) et s'engagent avec le même bloc prismatique (66).

7. Herse rotative selon l'une quelconque des revendications précédentes, dans laquelle chacune desdites brides radiales (36) est essentiellement en forme de losange avec deux sommets ayant un angle aigu formant lesdits prolongements (54).

8. Herse rotative selon l'une des revendications 1 à 6, dans laquelle chacune desdites brides radiales (36) a quatre prolongements (54) fixés par paires aux côtés latéraux opposés respectifs (20) dudit profil allongé (12).
